# EUROPEAN PATENT SPECIFICATION

(11) **EP 0 810 114 B1**
(45) Date of publication and mention of the grant of the patent: **23.08.2000**
(21) Application number: 97108720.0
(22) Date of filing: 30.05.1997
(51) Int. Cl.: B60K 26/04

(54) **Device for controlling the accelerator and a device of the drive system of an industrial vehicle**
Vorrichtung zur Kontrolle des Gaspedals und Vorrichtung für das Antriebssystem eines Nutzfahrzeuges
Dispositif de commande d'un accélérateur et dispositif pour le système d'entraînement d'un véhicule utilitaire

(30) Priority: 31.05.1996 IT TO960475
(43) Date of publication of application: 03.12.1997
(73) Proprietor: IVECO FIAT S.p.A., 10156 Torino (IT)
(72) Inventor: Riva, Vittorio, 10100 Torino (IT)
(74) Representative: Boggio, Luigi

(56) References cited:
- CH-A- 330 703
- US-A- 3 158 221

## Description

The present invention relates to a device for controlling the accelerator and a device of the drive system of an industrial vehicle, for instance the engine brake.

As is known, in modern industrial vehicles the accelerator control is connected to the engine brake control so that when the accelerator control is brought into an idling position, the engine brake automatically comes into operation. The accelerator is normally controlled by means of a potentiometer which is rotated by acting on the conventional lever of the accelerator pedal, while the engine brake is actuated by means of a microswitch actuated by this lever in an idling position which has, however, to be adjusted.

In a known device of the above type and according to the preamble of claim 1, the potentiometer of the accelerator is rotated by a pinion-toothed sector assembly: the toothed sector, rigid with the pedal lever, is pivoted on a frame mounted in a container and engages the pinion angularly coupled to the cursor of the potentiometer. The frame also bears the engine brake microswitch which is engaged by a member whose position can be adjusted with respect to the above-mentioned sector.

In this known device the member which engages the microswitch is formed by an adjustment screw, held in the adjusted position by a pair of nuts. These nuts may be rotated only after the device has been dismantled and the frame of the container removed, with the result that adjustment is very time-consuming.

The object of the present invention is to provide a device for controlling the accelerator and the engine brake, in which the adjustment of the engine brake control requires very little time and is extremely simple and economic, thereby remedying the drawbacks connected with the known device described above.

According to the present invention, this object is achieved by a device for controlling the accelerator and a device of the drive system of an industrial vehicle, comprising an accelerator control member pivoted on a fixed frame, a control member for the said device that can be actuated by this accelerator control member and means for adjusting the engagement position of this accelerator control member with the control member of the said device, characterised in that these adjustment means comprise a cam adapted to cooperate with this control member of the device and to assume a plurality of operating positions, that can be selected, with respect to this accelerator control member.

For improved understanding of the present invention, a preferred embodiment is described below, purely by way of example, with reference to the accompanying drawings, in which:
Fig. 1 is a partial perspective and exploded view of a device for controlling the accelerator and the engine brake of the invention;
Fig. 2 is a front view of the device of Fig. 1 in assembled form;
Fig. 3 is a longitudinal section along the line III-III of Fig. 2;
Fig. 4 is a view of a detail of Fig. 2, on an enlarged scale;
Fig. 5 is a partial view of the detail of Fig. 4.

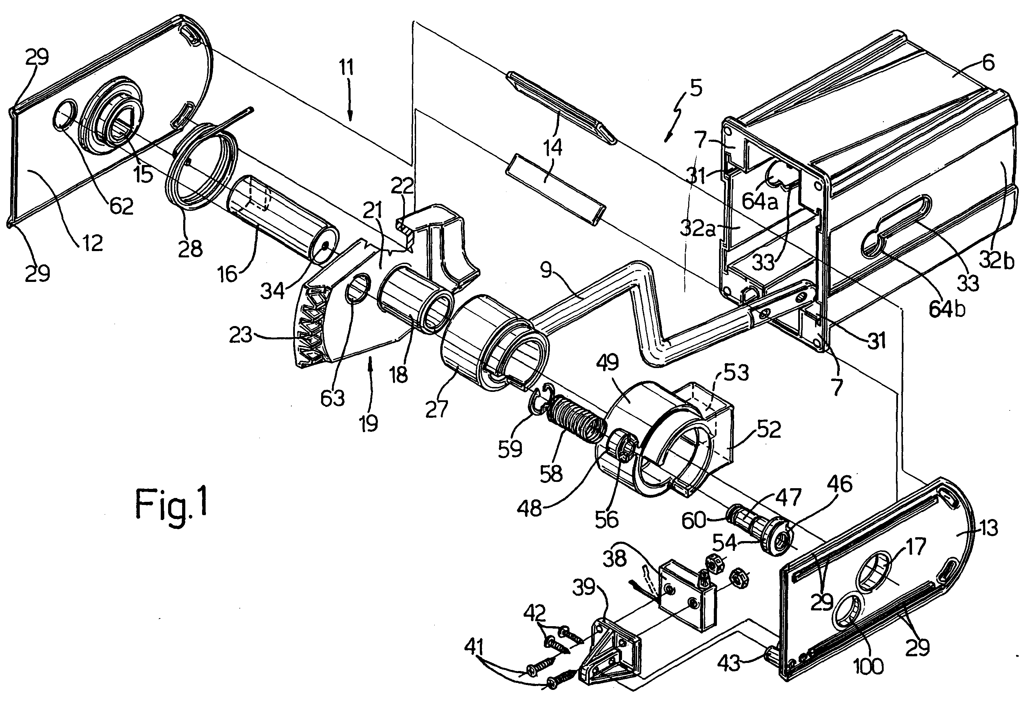

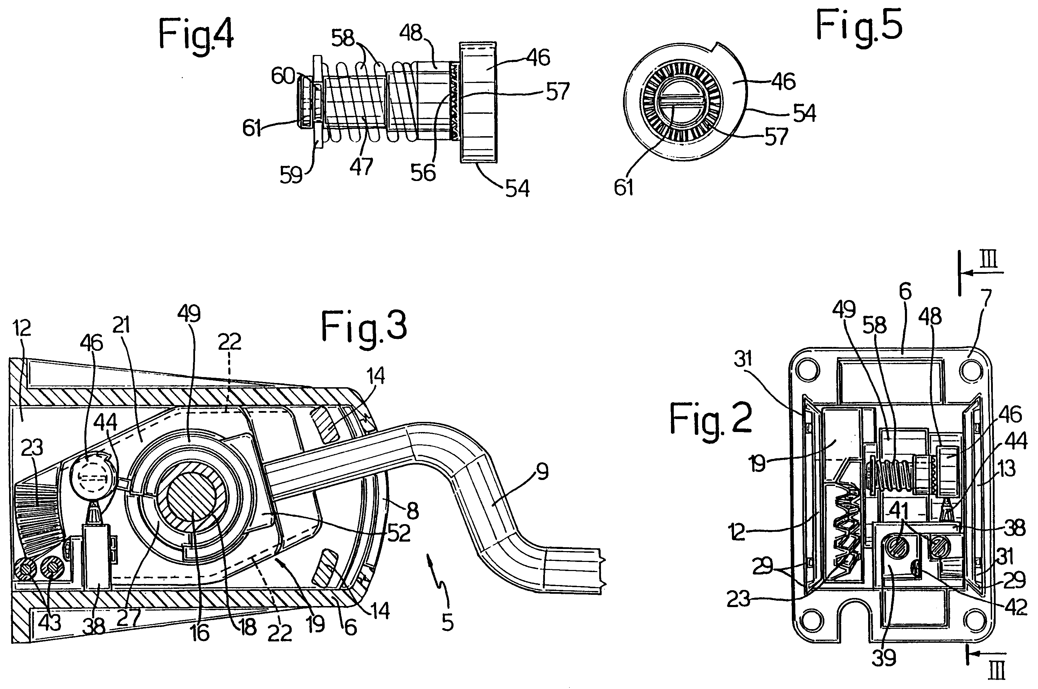

In Fig. 1, a control device for the accelerator and engine brake of an industrial vehicle is shown in general by 5. The device 5 comprises a container 6 substantially of parallelepipedic shape. The container 6 is open on one side, where there are disposed perforated flanges 7 adapted to be secured to a fixed support of the vehicle (not shown). The container 6 is provided with an opening 8 (Fig. 3), through which a lever 9 bearing the conventional accelerator pedal (not shown) passes.

The lever 9 is pivoted on a fixed frame, shown overall by 11 (Fig. 1), which is formed by two flanks 12 and 13 connected by a pair of crossbars 14. The flank 12 is in particular provided with a hole 15 whose edge has a plane zone on which the end of a pin 16 is keyed. The flank 13 is provided with a further hole 17 in which the other end of the pin 16 is engaged. In operation, the crossbars 14 act as stop members for the lever 9 in opposing directions, corresponding respectively to complete release (upward position) and the maximum possible acceleration (downward position) of the vehicle.

A sleeve 18 rigid with an accelerator control member 19 is mounted to rotate on the pin 16, which comprises a plate 21 perpendicular to the axis of the sleeve 18. The plate 21 (Fig. 3) is formed as two trapezia having their larger side in common and provided on their other sides with a folded edge 22. A portion of each edge 22 is adapted to abut against a corresponding shoulder of the container 6 to define the two end-of-stroke positions of the plate 21.

The plate 21 is terminated at the front by a toothed sector 23 adapted to engage a pinion (not shown). This pinion is rigid with a control potentiometer for the conventional engine fuel injectors and therefore the accelerator. The lever 9 is fixed on a sleeve 27 (Fig. 1) keyed in a known manner on the sleeve 18. A helical torsion spring 28 urges the lever 9 in an anti-clockwise direction in Fig. 3, retaining it normally in the rest position.

Each of the flanks 12 and 13 is provided with two pairs of parallel ribs 29 adapted to slide in two corresponding guides 31 of the container 6 so that the position of the sector 23 with respect to the pinion of the potentiometer can be adjusted. For this purpose, the container 6 is provided with two vertical walls 32a, 32b each having a slot 33 extending parallel to the guides 31. After the frame 11 has been inserted in the container 6 in the pre-selected adjusted position, it is secured by two screws (not shown) which are screwed, via the corresponding slots 33, into corresponding threaded holes 32 of the pin 16.

The control device 5 further comprises a microswitch 38, which is fixed on a bracket 39 by means of two screws and a nut 41. The bracket 39 is in turn fixed, by a further two screws 42, to two columns 43 borne by the flank 13 of the frame 11. In operation, the microswitch 38 is connected electrically with the engine brake control device. It comprises a push button 44 which, when depressed, prevents the actuation of the engine brake for the whole time during which it remains depressed.

As is known, the push button 44 is actuated by rotating the accelerator lever 9. Means for adjusting the angular position in which the lever 9 begins to actuate the push button 44 of the lever 9 may be provided between this lever 9 and the push button 44.

According to the present invention, these adjustment means comprise a cam 46 adapted to act on the push button 44. The cam 46 is rigid with a pin 47 rotating and sliding in a ring extension 48 borne excentrically by a sleeve 49 and having its axis parallel to the axis of the sleeve 49. The cam 46 therefore rotates about an axis perpendicular to the direction of actuation of the push button 44. The sleeve 49 is also provided with a prismatic extension 52 having a notch 53 in which the end of the lever 9 fixed on the sleeve 27 engages. In this way, the sleeve 49 is angularly rigid with the lever 9 and with the member 19.

The cam 46 has a helical profile 54 (Figs. 3 and 5) with which the push button 44 engages. Consequently, by disposing the cam 46 in an appropriate angular position in the ring extension 48, this engagement takes place at a desired minimum position of the lever 9, For this purpose, a front toothed coupling, comprising a toothed crown 56 rigid with the portion 48, a toothed crown 57 rigid with the cam 46 and a spring 58 retaining the two crowns 56 and 57 in engagement, is disposed between the cam 46 and the portion 48.

The spring 58 is in particular a helical compression spring, bearing on one side against the ring extension 48 and on the other side against a stop ring 59 inserted in a groove 60 of the pin 47. The free end of the latter is provided with a notch 61 adapted to be engaged by a screwdriver. The flank 12 (Fig. 1) of the frame 11 is provided with an opening or hole 62. The latter is aligned with the ring extension 48 when the sleeve 49 is in the rest position.

The wall 21 bearing the sector 23 is in turn provided with a hole 63 which is aligned with the hole 62 in the rest position of the member 19. Lastly, the wall 32a of the container 6, corresponding to the flank 12, is provided with an opening 64a of dimensions such that it remains aligned with the hole 62 in any adjustment position of the frame 11 with respect to the container 6 so as to allow access from outside for adjustment, as described in detail below. The other wall 32b of the container 6 is also provided with an opening 64b, which remains aligned with a through hole 100 provided in the flank 13 so as to allow, in operation, the contact between the cam 46 and the push button 44 to be checked. The openings 64a and 64b are preferably engaged, in operation, by caps (not shown).

The adjustment of the angular position of the cam 46 takes place as follows.

With the frame 11 already mounted in the container 6, and with its position along the guides 31 already adjusted with respect to the pinion of the potentiometer, a screwdriver is inserted through the opening 64 and the holes 62 and 63, engaging the notch 61 of the pin 47. By pressing lightly on the pin 47 the action of the spring 58 is overcome, disengaging the toothed crown 56 from the toothed crown 57.

Then, using the same screwdriver, the angular position of the pin 47 and the cam 46 is rotated such that the latter engages the push button 44 when the sleeve 49, and therefore the lever 9 of the accelerator, is brought into the desired angular position. Finally, following the removal of the screwdriver, the spring 58 causes the crown 56 to re-engage with the crown 58 as a result of which the cam 46 is locked in the new position.

The advantages of the control device of the present invention with respect to known devices are evident from the above description.

In the first instance, the adjustment of the cam 46 is carried out after the sector 23 has been correctly positioned with respect to the pinion of the potentiometer, thereby obviating the need to re-adjust this position every time.

Moreover, the adjustment of the cam 46 is carried out by a simple screwdriver operation from outside the container 6 with a substantial saving of time.

Various modifications and improvements may obviously be made to the control device described above without departing from the scope of the claims.

The toothed crown 57 may, for instance, be borne directly by the sleeve 27 of the lever 9, or by the plate 21. Moreover, the spring 58 may be replaced by a different type of spring, for instance a leaf spring. It is lastly evident that the microswitch 38 may be used to control any other device of the engine drive system, for instance the automatic gear change rather than the engine brake.

## Claims

1. A device for controlling the accelerator and a device of the drive system of an industrial vehicle, comprising an accelerator control member (19) pivoted on a fixed frame (11), a control member of the said device (38) that can be actuated by this accelerator control member (19) and means (46, 56, 57) for adjusting the engagement position of this accelerator control member (19) with respect to the control member of the said device (38), characterised in that these adjustment means (46, 56, 57) comprise a cam (46) adapted to cooperate with the control member of the said device (38) and to assume a plurality of operating positions, that can be selected, with respect to this accelerator control member (19).

2. A device as claimed in claim 1, in which the control member of the device comprises a microswitch (38), characterised in that the cam (46) can rotate about an axis perpendicular to the direction of actuation of the microswitch (38).

3. A device as claimed in claim 2, in which this microswitch (38) has a push button (44), characterised in that the cam (46) has a helical profile (54) adapted to engage this push button (44).

4. A device as claimed in claim 3, characterised in that an excentrical member, formed by an annular extension (48) rigid with the accelerator control member (19), is engageable with the cam (46) by means of a front coupling (56, 57).

5. A device as claimed in claim 4, characterised in that the annular extension (48) is disposed excentrically with respect to a pivot (16) of the accelerator control member (19), the cam (46) sliding parallel to this pivot (16) in order to engage and disengage with this excentric member (48).

6. A device as claimed in claim 5, characterised in that the coupling (56, 57) comprises a first toothed crown (57) rigid with the excentric member (48), a second toothed crown (56) rigid with the cam (46) and spring means (58) adapted to keep the toothed crowns (56, 57) engaged.

7. A device as claimed in claim 6, characterised in that the spring means comprise a compression spring (58) disposed between the excentric member (48) and an opposing member (59) rigid with the cam (46), the toothed crowns (56, 57) being disengaged by axially displacing the cam (46) in order to overcome the action of the spring (58).

8. A device as claimed in claim 7, characterised in that the opposing member (59) is borne by a pin (47) rigid with the cam (46) and sliding in the annular extension (48), wherein this pin (47) can be axially displaced in order to disengage the second toothed crown (56) from the first toothed crown (57) and rotated to adjust the angular position of the cam (46) in this annular extension (48).

9. A device as claimed in claim 8, characterised in that the frame (11) comprises a pair of flanks (12, 13), one of which is provided with an opening (62) coaxial with the pin (47), the free end of the pin (47) being shaped so that it can be engaged by a screwdriver.

10. A device as claimed in claim 9, characterised in that the accelerator control member (19) comprises a plate (21) bearing a toothed sector (23), this plate (21) being pivoted on the flanks (12, 13) and being provided with a hole (63) which is aligned in the rest position with the opening (62) as a result of which the pin (47) can be accessed by the screwdriver through the hole (63) and the opening (62).

11. A device as claimed in claim 10, in which the frame (11) is adapted to be secured to the interior of a fixed container (6) in a position that can be adjusted in a predetermined direction, this plate (21) being rigid with a member (9) that can be actuated from outside the container (6), characterised in that the container (6) is provided with an opening (64a) of dimensions such that it remains aligned with the opening (62) of this flank (12) in any adjustment position of the frame (11).

12. A device as claimed in claim 10, in which the frame (11) is adapted to be secured to the interior of a fixed container (6) in a position that can be adjusted in a predetermined direction, this plate (21) being rigid with a member (9) that can be actuated from outside the container (6), characterised in that the container (6) is provided with a further opening (64b) aligned with a through hole (100) provided in a flank (13) opposite the flank (12) in order to enable inspection, from outside the container (6), of the contact zone between the cam (46) and the push button (44).

## Patentansprüche

1. Vorrichtung zur Steuerung der Beschleunigungsvorrichtung und einer Vorrichtung des Antriebssystems eines Nutzfahrzeuges, mit einem Beschleunigungsvorrichtungs-Steuerungselement (19), das an einem festen Rahmen (11) angelenkt ist, einem Steuerungselement der Vorrichtung (38), das durch dieses Beschleunigungsvorrichtungs-Steuerungselement (19) betätigt werden kann, und Einrichtungen (48, 56, 57) zum Anpassen der Eingriffsstellung dieses Beschleunigungsvorrichtungs-Steuerungselements (19) bezüglich des Steuerungselements der Vorrichtung (38),
dadurch **gekennzeichnet**, dass
diese Anpassungseinrichtungen (46, 56, 57) einen Nocken (46) aufweisen, der dafür angepasst ist, mit dem Steuerungselement der Vorrichtung (38) zusammenzuwirken und mehrere Betriebsstellungen anzunehmen, die bezüglich dieses Beschleunigungsvorrichtungs-Steuerungselements (19) gewählt werden können.

2. Vorrichtung nach Anspruch 1, bei der das Steuerungselement der Vorrichtung einen Mikroschalter (38) aufweist,
dadurch **gekennzeichnet**, dass
sich der Nocken (46) um eine Achse senkrecht zu der Betätigungsrichtung des Mikroschalters (38) drehen kann.

3. Vorrichtung nach Anspruch 2, bei der dieser Mikroschalter (38) einen Druckknopf (44) aufweist,
dadurch **gekennzeichnet**, dass
der Nocken (46) ein schraubenförmiges Profil (54) aufweist, das dafür angepasst ist, mit diesem Druckknopf (44) in Eingriff zu kommen.

4. Vorrichtung nach Anspruch 3,
dadurch **gekennzeichnet**, dass
ein exzentrisches Element, das durch eine ringförmige Verlängerung (48) gebildet ist, die mit dem Beschleunigungsvorrichtungs-Steuerungselement (19) fest ist, mit dem Nocken (46) mittels einer vorderen Kupplung (56, 57) in Eingriff bringbar ist.

5. Vorrichtung nach Anspruch 4,
dadurch **gekennzeichnet**, dass
die ringförmige Verlängerung (48) exzentrisch bezüglich einer Drehachse (16) des Beschleunigungsvorrichtungs-Steuerungselements (19) angeordnet ist, wobei der Nocken (46) parallel zu dieser Drehachse (16) gleitet, um mit diesem exzentrischen Element (48) in und außer Eingriff zu kommen.

6. Vorrichtung nach Anspruch 5,
dadurch **gekennzeichnet**, dass
die Kupplung (56, 57) eine erste gezahnte Krone (57), die mit dem exzentrischen Element (48) fest ist, eine zweite gezahnte Krone (56), die mit dem Nocken (46) fest ist, und eine Federeinrichtung (58) aufweist, die dafür angepasst ist, die gezahnten Kronen (56, 57) in Eingriff zu halten.

7. Vorrichtung nach Anspruch 6,
dadurch **gekennzeichnet**, dass
die Federeinrichtung eine Druckfeder (58) aufweist, die zwischen dem exzentrischen Element (48) und einem entgegengesetzten Element (59), das fest mit dem Nocken (46) ist, angeordnet ist, wobei die gezahnten Kronen (56, 57) durch axiales Versetzen des Nockens (46), um die Wirkung der Feder (58) zu überwinden, außer Eingriff gebracht werden.

8. Vorrichtung nach Anspruch 7,
dadurch **gekennzeichnet**, dass
das entgegengesetzte Element (59) durch einen Stift (47) getragen wird, der fest mit dem Nocken (46) ist und in der ringförmigen Verlängerung (48) gleitet, wobei dieser Stift (47) axial versetzt werden kann, um die zweite gezahnte Krone (56) von der ersten gezahnten Krone (57) außer Eingriff zu bringen, und gedreht werden kann, um die Winkelstellung des Nockens (46) in dieser ringförmigen Verlängerung (48) anzupassen.

9. Vorrichtung nach Anspruch 8,
dadurch **gekennzeichnet**, dass
der Rahmen (11) ein Paar von Flanken (12, 13) aufweist, von denen eine mit einer Öffnung (62) versehen ist, die mit dem Stift (47) koaxial ist, wobei das freie Ende des Stiftes (47) derart geformt ist, dass es durch einen Schraubendreher in Eingriff gebracht werden kann.

10. Vorrichtung nach Anspruch 9,
dadurch **gekennzeichnet**, dass
das Beschleunigungsvorrichtungs-Steuerungselement (19) eine Platte (21) aufweist, die einen gezahnten Bereich (23) trägt, wobei diese Platte (21) an den Flanken (12, 13) angelenkt ist und mit einem Loch (63) versehen ist, die in der Ruheposition mit der Öffnung (62) ausgerichtet ist, so dass im Ergebnis der Stift (47) durch den Schraubendreher durch das Loch (63) und die Öffnung (62) zugänglich ist.

11. Vorrichtung nach Anspruch 10, bei welcher der Rahmen (11) dafür angepasst ist, an das Innere eines festen Behälters (6) in einer Position befestigt zu werden, die in einer vorbestimmten Richtung angepasst werden kann, wobei diese Platte (21) fest mit einem Element (9) ist, das von außerhalb des Behälters (6) betätigt werden kann,
dadurch **gekennzeichnet**, dass
der Behälter (6) mit einer Öffnung (64a) mit Abmessungen derart versehen ist, dass sie mit der Öffnung (62) dieser Flanke (12) in jeder beliebigen Anpassungsposition des Rahmens (11) ausgerichtet bleibt.

12. Vorrichtung nach Anspruch 10, bei welcher der Rahmen (11) dafür angepasst ist, an das Innere eines festen Behälters (6) in einer Position befestigt zu werden, die in einer vorbestimmten Richtung angepasst werden kann, wobei diese Platte (21) fest mit einem Element (9) ist, das von außerhalb des Behälters (6) betätigt werden kann,
dadurch **gekennzeichnet**, dass
der Behälter (6) mit einer weiteren Öffnung (64b) versehen ist, die mit einer Durchgangsöffnung (100) ausgerichtet ist, die in einer Flanke (13) entgegengesetzt zu der Flanke (12)vorgesehen ist, um von außerhalb des Behälters (6) eine Untersuchung des Kontaktbereichs zwischen dem Nocken (46) und dem Druckknopf (44) zu ermöglichen.

## Revendications

1. Dispositif pour commander l'accélérateur et un dispositif du système d'entraînement d'un véhicule industriel ou utilitaire, comprenant un organe (19) de commande d'accélération pivotant sur un châssis fixe (11), un organe de commande dudit dispositif (38) pouvant être actionné par cet organe (19) de commande d'accélération et des moyens (46, 56, 57) pour régler la position de contact de cet organe de commande d'accélération (19) par rapport à l'organe de commande dudit dispositif (38), caractérisé en ce que lesdits moyens de réglage (46, 56, 57) comprennent une came (46) conçue pour coopérer avec l'organe de commande dudit dispositif (38) et pour prendre plusieurs positions de travail qui peuvent être choisies, par rapport audit organe de commande d'accélération (19).

2. Dispositif tel que stipulé dans la revendication 1, dans lequel l'organe de commande du dispositif comprend un microrupteur (38), caractérisé en ce que la came (46) peut tourner autour d'un axe perpendiculaire à la direction d'actionnement du microrupteur (38).

3. Dispositif tel que stipulé dans la revendication 2, dans lequel ce microrupteur (38) comporte un bouton-poussoir (44), caractérisé en ce que la came (46) présente un profil hélicoïdal (54) conçu pour coopérer avec le bouton-poussoir (44).

4. Dispositif tel que stipulé dans la revendication 3, caractérisé en ce qu'un organe excentrique, formé par un prolongement annulaire (48) solidaire de l'organe de commande d'accélération (19), peut être amené à coopérer avec la came (46) au moyen d'un dispositif coupleur avant (56, 57).

5. Dispositif tel que stipulé dans la revendication 4, caractérisé en ce que le prolongement annulaire (48) est disposé de façon excentrique par rapport à un pivot (16) de l'organe de commande d'accélération (19), la came (46) coulissant de manière parallèle à ce pivot (16) afin de coopérer avec cet organe excentrique (48) et d'être désaccouplée de celui-ci.

6. Dispositif tel que stipulé dans la revendication 5, caractérisé en ce que le dispositif coupleur (56, 57) comprend une première couronne dentée (57) solidaire de l'organe excentrique (48), une deuxième couronne dentée (56) solidaire de la came (46) et des moyens (58) formant ressorts adaptés pour retenir les couronnes dentées (56, 57) en prise.

7. Dispositif tel que stipulé dans la revendication 6, caractérisé en ce que les moyens formant ressorts comprennent un ressort de compression (58) disposé entre l'organe excentrique (48) et un organe opposé (59) solidaire de la came (46), les couronnes dentées (56, 57) étant désaccouplées par déplacement axial de la came (46) afin de surmonter l'action du ressort (58).

8. Dispositif tel que stipulé dans la revendication 7, caractérisé en ce que l'organe opposé (59) est porté par un axe (47) solidaire de la came (46) et coulissant dans le prolongement annulaire (48), dans lequel ledit axe (47) peut être déplacé axialement afin de désaccoupler la deuxième couronne dentée (56) de la première couronne dentée (57) et soumis à une rotation pour régler la position angulaire de la came (46) dans ce prolongement annulaire (48).

9. Dispositif tel que stipulé dans la revendication 8, caractérisé en ce que le châssis (11) comprend une paire de flancs (12, 13), dont l'un est muni d'une ouverture (62) coaxiale par rapport à l'axe (47), l'extrémité libre de l'axe (47) ayant une forme telle qu'elle peut coopérer avec un tournevis.

10. Dispositif tel que stipulé dans la revendication 9, caractérisé en ce que l'organe (19) de commande d'accélération comprend une plaque (21) portant un secteur denté (23), cette plaque (21) pivotant sur les flancs (12, 13) et étant munie d'un trou (63) qui est aligné en position de repos avec l'ouverture (62), en conséquence de quoi le tournevis peut accéder à l'axe (47) par le trou (63) et l'ouverture (62).

11. Dispositif tel que stipulé dans la revendication 10, dans lequel le châssis (11) est adapté pour être assujetti à l'intérieur d'un conteneur fixe (6) dans une position qui peut être réglée dans une direction prédéterminée, cette plaque (21) étant solidaire d'un organe (9) qui peut être actionné de l'extérieur du conteneur (6), caractérisé en ce que le conteneur (6) est muni d'une ouverture (64a) ayant des dimensions telles qu'elle reste alignée avec l'ouverture (62) dudit flanc (12) dans n'importe quelle position de réglage du châssis (11).

12. Dispositif tel que stipulé dans la revendication 10, dans lequel le châssis (11) est adapté pour être assujetti à l'intérieur d'un conteneur fixe (6) dans une position qui peut être réglée dans une direction prédéterminée, ladite plaque (21) étant solidaire d'un organe (9) qui peut être actionné de l'extérieur du conteneur (6), caractérisé en ce que le conteneur (6) est muni d'une ouverture supplémentaire (64b) alignée avec un trou traversant (100) ménagé dans un flanc (13) à l'opposé du flanc (12) afin de permettre une inspection, depuis l'extérieur du conteneur (6), de la zone de contact entre la came (46) et le bouton-poussoir (44).
